# EUROPEAN PATENT SPECIFICATION

(11) **EP 1 914 902 B1**
(45) Date of publication and mention of the grant of the patent: **21.04.2010**
(21) Application number: 06301067.2
(22) Date of filing: 20.10.2006
(51) Int. Cl.: H04B 1/707

(54) **Method and system for indoor communications with digital distribution**
Verfahren und System für ein Innenraum-Funkkommunikationssystems mit digitaler Verteilung
Procédé et système pour un système de radiocommunication intérieur avec distribution digitale

(43) Date of publication of application: 23.04.2008
(73) Proprietor: Alcatel Lucent, 75008 Paris (FR)
(72) Inventor: Hettstedt, Heinz-Dieter, 30916, Isernhagen (DE)
(74) Representative: Schmidt, Werner Karl

(56) References cited:
- WO-A-2004/004399
- US-A1- 2006 229 019
- US-A1- 2006 233 111

## Description

The present invention relates to indoor communication systems, particularly inside buildings and tunnels, comprising a digital distribution network.

Wireless communications systems are becoming an increasingly widespread phenomenon of modern communications. Since many users place an increasing number of cellular calls within buildings or other confined structures, there is a need to achieve high quality indoor coverage.

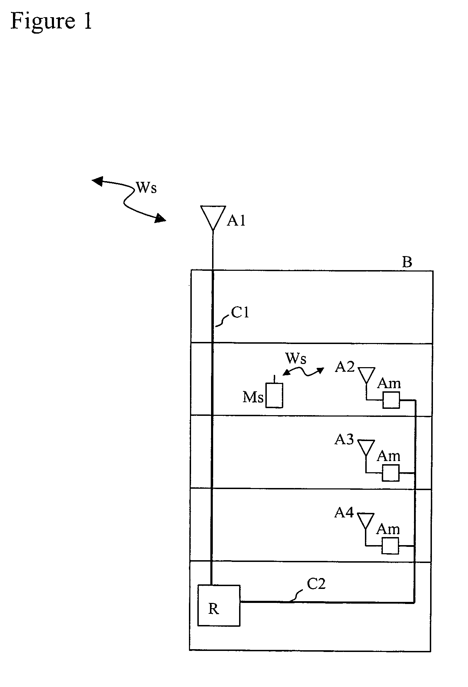

A conventional configuration to extend a wireless communication service e.g. GSM or UMTS, from an outdoor environment to an indoor area is shown in Figure 1 and is characterized by the utilization of a repeater R that is typically located within a building B to retransmit within the building a wireless signal Ws received at an external antenna A1 or retransmit outside the building the wireless signals Ws of mobile stations Ms, e.g. mobile phones, handheld computers and the like, located inside the building B. In the downlink, that is when the wireless signals Ws from the external environment are transmitted to the mobile stations Ms inside the building B, said outdoor wireless signals are passed along a first connection C1 to the repeater R which forwards the signal along a second connection C2 to a plurality of inter-connected amplifiers Am, the amplifiers amplify the signals which are then transmitted over the in-building antennas A2 to A4. In the uplink direction, that is, when the wireless signals Ws from the mobile stations Ms are transmitted to a wireless infrastructure outside the building B, the repeater R receives said signals along connection C2 and transmits them along connection C1 to the external antenna A1.

It is also possible that the repeater R of the indoor communications structure is replaced by a base station connected to a communications core network along connection C1.

Connections C1 and C2 may be a radio frequency (RF) connection or network, e.g. using coaxial cable, an optical connection or network, e.g. using optical fiber, an electro-optical network, that is, when the wireless signal transmitted along the cable changes between electrical and optical transmission, or a high-speed data distribution network such as an Ethernet network. The in-building antennas A2 to A4 may also be implemented as RF radiating cables. This is typically the case when the wireless signals shall be propagated in tunnels.

US 2006/233111 A1 discloses a modular test chassis for use in testing wireless devices including a channel emulation module. The module comprises circuitry for emulating the effects of a dynamic physical environment including multipath effect and delay lines on signals in the transmission channel. The delay lines are coupled to a splitter/combiner and may be fixed or programmable devices which add delay to N versions of the signal. A latency measurement system applies timestamps frames as they are transmitted and received at the test module for improved latency measurement accuracy.

The object of the present is to provide a method and a system for indoor communications which improves the quality of the wireless indoor service coverage.

The object is achieved by a method for indoor communications according to claim 1 and/or 2, a multi-path arrangement according to claim 3, a transmitting or receiving unit according to claim 6, a digital distribution network according to claim 7 and an indoor communications system according to claim 8.

The basic idea behind the invention arises from the observation that in indoor or confined environments the multi-path time delay of the radio signals reaching or transmitted by a mobile station is shorter than the minimum needed for a rake receiver of the mobile station or a base station to work properly i.e. at least one chip length (e.g. 260 ns for UMTS). In such cases then there is no benefit from the technical advantages of the rake receivers, already present in the mobile stations, in order to achieve improved reception i.e. a rake receiver shows a higher Signal to Noise Ratio (SNR) in a multi-path environment than in an environment without multi-path effects. With the present solution, optimum outdoor multi-path propagation effects are emulated in indoor "clean" environments (locations where the overall differential time delay of radio signals due to multi-path propagation is shorter than 1 chip length). The method and system for indoor communications according to the invention allows the generation of signals having multi-path time delays of at least one chip length. According to the invention, combining a plurality of substantially identical sub-signals showing different time delays between them of at least one chip length, generates a new signal showing a behavior similar to a radio signal in an outdoor multi-path environment.

The solution can be applicable for indoor downlink or uplink transmission or both for indoor downlink and uplink transmission. For signal uplink direction, that is from mobile station to the base station, it is advantageous that the rake receiver of the base station receives signals with multi-path delays greater than 1 chip length, and for signal downlink direction, that is from the base station to the mobile station, it is advantageous that the rake receiver of the mobile station receives signals with multi-path delays greater than 1 chip length.

According to the present invention, the solution is preferably adapted for transmission of signals to and from a mobile station located in a confined area, such as a building or a tunnel, using at least a digital transmission network. The system for indoor communications according to the invention comprises a digital network for distribution of signals between a base station and a digital remote unit which provides the signals to an indoor antenna or radiating cable. A digital distribution network is any network in which information is sent in digital form using any known physical transmission medium. The digital remote units comprise digital transmitting or receiving means for transmitting or receiving the digital signals along the digital distribution network.

The digital network according to the invention is used advantageously to improve the service performance for radio communications into buildings and tunnels which do not provide system conditions sufficient to benefit from the rake receivers of mobile stations or base stations using, for example, CDMA or UMTS communication technology.

An embodiment example of the invention is now explained with the aid of Figures 1 to 4.

Figure 1 shows a conventional indoor communications system structure.

Figure 2 shows an example structure of an indoor communications system according to the invention.

Figure 3 shows an exemplary detail of an indoor communications system according to the invention.

Figure 4 shows a multi-path arrangement according to the invention.

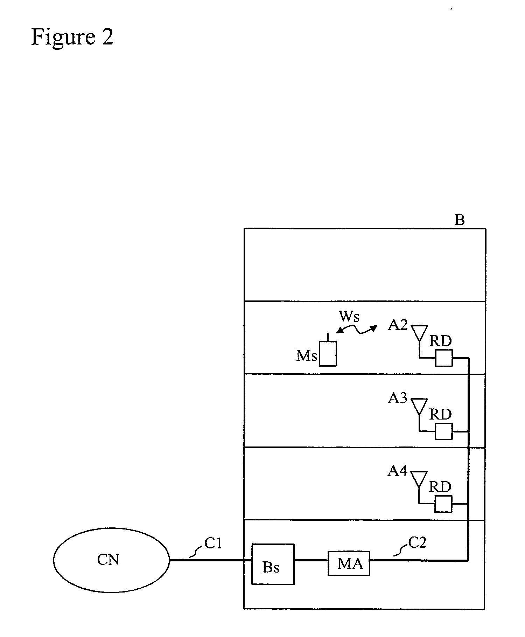

An example of an indoor communications system structure according to the invention, located inside a building B, is shown in Figure 2, comprising a base station Bs, a digital distribution network C2, a multi-path arrangement MA, three digital remote units RD and three in-building antennas A2 to A4. The base station Bs is connected to a core network CN along a first connection network C1 and the indoor antennas A2 to A4 send and receive radio signals Ws to/from a mobile station Ms.

In the downlink direction, communications core network CN signals intended for the mobile station Ms are received by the base station Bs along connection C1. Said signals are then passed through the base station digital interface to the digital network C2 for distribution. The digital network comprises the multi-path arrangement MA where the digital signals are split into at least two substantially identical digital sub-signals, a different time delay is applied to each individual digital sub-signal so that the at least two substantially identical digital sub-signals have a time delay difference of at least 1 chip length, and subsequently the digital sub-signals are combined. Said combined signals at the output of the multi-path arrangement MA are distributed to the digital remote units RD, which adapt the received RF signal, e.g. with the use of an amplifier and/or a digital-to-analog converter, for transmission through the in-building antennas A2 to A4. Since the in-building antennas transmit this new radio signal showing multi-path effects, the performance of rake receivers within the mobile stations of the building is optimized and the quality of reception in such an environment is improved.

In the uplink direction, radio signals Ws transmitted by the mobile station Ms located inside the building are received by the in-building antenna A2 and passed in to the digital remote unit RD, which adapts the signals, e.g. with the use of an analog-to-digital converter and/or analog-to-digital amplifier, for transmission through the digital connection C2 to the multi-path arrangement MA. According to the invention, in the multi-path arrangement, said received digital signals are split into at least two substantially identical digital sub-signals, a different time delay is applied to each individual digital sub-signal so that the at least two substantially identical digital sub-signals have a time delay difference of at least 1 chip length, and subsequently the digital sub-signals are combined. Said combined signals at the output of the multi-path arrangement MA are distributed to the base station Bs, which provides said signals, in appropriate form, to a rake receiver within the base station which is in charge of processing the multi-path signal components of the digital signal and obtain the transmitted mobile station signal. Said signal is then forwarded to the communications core network CN. By emulating multi-path effects in the signals received from the mobile stations located in environments that are free of multi-path effects, the performance of the rake receiver within the base station is optimized and the reception performance in uplink direction is improved.

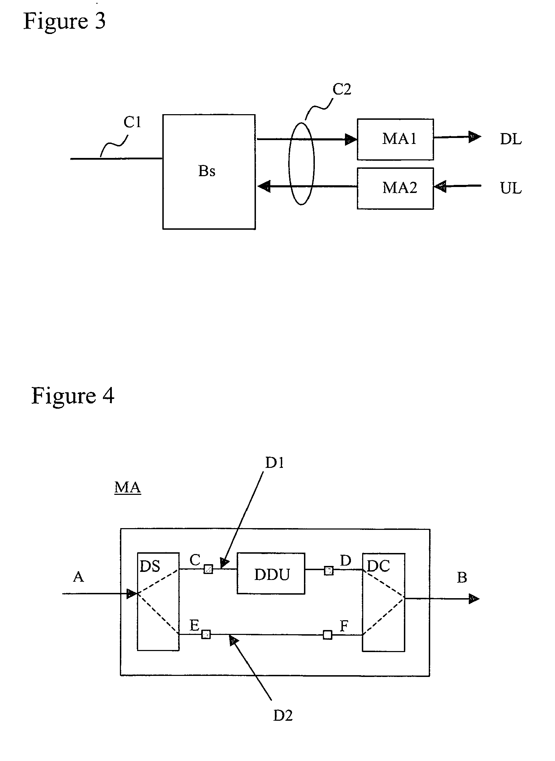

Figure 3 shows an exemplary detail of an indoor communications system comprising a first connections network C1, a base station Bs, a digital distribution network C2 and two multi-path arrangements MA1 and MA2 according to the invention, the first for downlink transmission DL and the second for uplink transmission UL.

Although two separate digital lines are shown, one for uplink UL and one for downlink DL, there is also the possibility to use only one digital line for both uplink and downlink when further known techniques for distinguishing the digital uplink signal from the digital downlink signal are applied to the digital distribution network.

Figure 4 shows an example of a multi-path arrangement MA according to the invention for a digital distribution network, comprising a digital signal input port A, a digital signal output port B, two digital transmission lines D1 and D2, a digital splitter DS and a digital combiner DC, nodes C,D, E and F, and a digital delay unit DDU.

The digital signal input A is connected to the digital splitter DS which splits an incoming digital signal in two substantially identical digital sub-signals and outputs them in nodes C and E. A first digital transmission line D1 is connected between output node C of the digital splitter DS and input node D of the digital combiner DC. A second digital transmission line D2 is connected between output node E of the digital splitter DS and input node F of the digital combiner DC. A digital delay unit DDU is arranged in the first digital transmission line D1. The digital combiner DC combines the two incoming digital sub-signals into a single digital signal at output port B.

The digital splitter DS splits an incoming digital signal that is fed in input port A into two substantially identical digital sub-signals. Those two digital sub-signals take two different signal paths ACDB and AEFB. The signal path ACDB introduces a time delay of at least one chip length, e.g. at least 260 ns for UMTS, to that digital sub-signal. The digital combiner DC combines the two digital sub-signals after passing through their individual signal paths ACD and AEF to a new digital output signal showing a behavior similar to a signal in a multi-path environment.

Although Figure 4 shows an arrangement with only two signal paths ACDB and AEFB, it is possible to implement a multi-path arrangement MA comprising more than two signal paths. Then, the preferred condition is that each signal path "n" comprises a time delay of at least a multiple of the chip length ( "n x chip length", n = 0,1,2, ..., ), that is, the individual signal paths provide time delays of zero, one, two, three etc. chip lengths. An incoming signal is then split into a number "n+1" of substantially identical digital sub-signals equal to the number of signal paths. After the sub-signals have passed through their individual signal paths they are combined to a new signal at output port B showing multi-path effects, that is, showing a behavior similar to a radio signal received in an outdoor multi-path environment. The new combined signal comprises the necessary characteristics needed for the rake receivers present in mobile stations and base stations to demodulate this signal. This enables the activation of the so-called rake effect providing a higher SNR in receivers of node base stations and mobile phones.

The digital delay unit ODU can be implemented by any general known means and can provide a variable and adjustable time delay. Although the multi-path arrangement of Figure 4 only shows one digital delay unit DDU arranged in the first digital transmission line D1, it is possible to arrange a second digital delay unit in the second digital transmission line D2, as long as the condition that the first signal path ACDB introduces a time delay of at least one chip length greater than the time delay introduced by the second signal path AEFB.

For the sake of generalization, it is understood for a person skilled in the art that the multi-path arrangement MA described herein can be implemented in hardware or software form i.e. the digitalized input can be processed according to the invention inside a processor or a program running on a computer. It is also understood that although presented in the figures as a standalone arrangement of the digital transmission network of the indoor communications system said functionality can also be implemented inside the digital repeater or the base station of the indoor communications system.

## Claims

1. Method for indoor communications, the method comprising
a base station (Bs) receiving a signal intended for a mobile station (Ms) located inside a confined environment (B),
the base station adapting said signal for transmission through a digital network (C2),
the digital network (C2) distributing the digital signal to a digital remote unit (RD), which adapts the digital signal for transmission through a wireless transmission means (A2 to A4),
the mobile station (Ms) receiving the signal transmitted by the wireless transmission means (A2 to A4) and providing said signal to a rake receiver,
the method **characterized by**
in a multi-path arrangement (MA) arranged within the digital network, splitting the digital signal into at least two substantially identical digital sub-signals, applying a different time delay to each individual digital sub-signal so that the time delay difference between the digital sub-signals is at least one chip length, and combining the at least two digital sub-signals with different time delays.

2. Method for indoor communications, the method comprising
a wireless reception means (A2 to A4) receiving a wireless signal (Ws) from a mobile station (Ms) located inside a confined environment (B),
the wireless reception means passing the received signal to a digital remote unit (RD) which adapts the signal for transmission through a digital network (C2),
the digital network (C2) distributing the digital signal to a base station (Bs), and the base station (Bs) providing the received signal to a rake receiver,
the method **characterized by**
in a multi-path arrangement (MA) arranged within the digital network, splitting the digital signal into at least two substantially identical digital sub-signals, applying a different time delay to each individual digital sub-signal so that the time delay difference between the digital sub-signals is at least one chip length, and combining the at least two digital sub-signals with different time delays.

3. Multi-path arrangement (MA) for adapting a single digital output signal to a rake receiver in a mobile station (Ms) located inside a confined environment (B), said output signal being distributed by a digital network (C2) of an indoor communications system, comprising means for
splitting an incoming digital signal into at least two identical digital sub-signals,
providing each digital sub-signal to a signal path (AEFB, ACDB) applying a different time delay to each individual digital sub-signal so that the time delay difference between the digital sub-signals is at least one chip length, and
combining the at least two digital sub-signals with different time delays into said single digital output signal.

4. The multi-path arrangement (MA) of claim 3 wherein the time delay difference between the signal paths (AEFB, ACDB) of the at least two individual digital sub-signals is a multiple of one chip length.

5. The multi-path arrangement (MA) of claim 3 wherein at least the first signal path (ACDB) comprises a digital delay unit (DDU).

6. A digital transmission network (C2) comprising a multi-path arrangement (MA) in one end and to a transmitting and/or receiving unit (Bs, RD) in the other end for distribution of said signal, according to any of the claims 3 to 5.

7. An indoor communications system comprising a multi-path arrangement (MA) according to any of the claims 3 to 5.

## Patentansprüche

1. Verfahren für die Innenraumkommunikation, wobei das Verfahren umfasst:
Eine Basisstation (Bs), welche ein für eine sich innerhalb einer begrenzten Umgebung (8) befindliche Mobilstation (Ms) bestimmtes Signal empfängt,
wobei die Basisstation das besagte Signal für die Übertragung über ein digitales Netzwerk (C2) anpasst,
wobei das digitale Netzwerk (C2) das digitale Signal an eine entfernte digitale Einheit (RD) verteilt welche das digitale Signal für die Übertragung über ein drahtloses Übertragungsmittel (A2 bis A4) anpasst,
wobei die Mobilstation (Ms) das von dem drahtlosen Übertragungsmittel (A2 bis A4) übertragene Signal empfängt und das besagte Signal an einen Rake-Empfänger bereitstellt,
wobei das Verfahren **gekennzeichnet ist durch**
in einer Mehrpfadanordnung (MA), welche innerhalb des digitalen Netzwerks angeordnet ist, Aufspalten des digitalen Signals in mindestens zwei im Wesentlichen identische Teilsignale, Anwenden einer unterschiedlichen Zeitverzögerung für jedes einzeine digitale Teilsignal, so dass die Zeitverzögerungsdifferenz zwischen den digitalen Teilsignalen mindestens eine Chiplänge beträgt, und Kombinieren der mindestens zwei digitalen Teilsignale mit unterschiedlichen Zeitverzögerungen.

2. Verfahren für die Innenraumkommunikation, wobei das Verfahren umfasst:
Ein drahtloses Empfangsmittel (A2 bis A4) zum Empfangen eines drahtlosen Signals (Ws) von einer sich innerhalb einer begrenzten Umgebung (B) befindlichen Mobilstation (Ms),
wobei das drahtlose Empfangsmittel das empfangene Signale an eine entfernte digitale Einheit (RD) weiterleitet, welche das Signal für die Übertragung über ein digitales Netzwerk (C2) anpasst,
wobei das digitale Netzwerk (C2) das digitale Signal an eine Basisstation (Bs) verteilt und die Basisstation (Bs) das empfangene Signal an einen Rake-Empfänger bereitstellt,
wobei das Verfahren **gekennzeichnet ist durch**
in einer Mehrpfadanordnung (MA), welche innerhalb des digitalen Netzwerks angeordnet ist, Aufspalten des digitalen Signals in mindestens zwei im Wesentlichen identische Teilsignale, Anwenden einer unterschiedlichen Zeitverzögerung für jedes einzelne digitale Teilsignal, so dass die Zeitverzögerungsdifferenz zwischen den digitalen Zeitsignalen mindestens eine Chiplänge beträgt, und Kombinieren der mindestens zwei digitalen Teilsignale mit unterschiedlichen Zeitverzögerungen.

3. Mehrpfadanordnung (MA) zum Anpassen eines einzelnen digitalen Ausgangssignals für einen Rake-Empfänger in einer Mobilstation (Ms), welche sich innerhalb einer begrenzten Umgebung (B) befindet, wobei das besagte Ausgangssignal von einem digitalen Netzwerk (C2) eines Innenraum-Kommunikationsystems verteilt wird, umfassend Mittel zum
Aufspalten eines eingehenden digitalen Signals in mindestens zwei identische digitale Teilsignale,
Bereitstellen eines jeden digitalen Teilsignals an signalpfad (AEFB, ACDB) Anwenden einer unterschiedlichen Zeitverzögerung für jedes einzelne digital Teilsignal, so dass die Zeitverzögerungsdifferenz zwischen den digitalen Zeitsignalen mindestens eine Chiplänge beträgt, und
Kombinieren der mindestens zwei digitalen Teilsignale mit unterschiedlichen Zeitverzögerungen in das besagte einzelne digitale Ausgangssignal.

4. Die Mehrpfadanordnurig (MA) nach Anspruch 3, wobei die Zeitverzögerungsdifferenz zwischen den Signalpfaden (AEFB, ACDB) der mindestens zwei einzelnen digitalen Teilsignale ein Vielfaches einer Chiplänge ist.

5. Die Mehrpfadanordnung (MA) nach Anspruch 3, wobei zumindest der erste Signalpfad (ACDB) eine digitale Verzögerüngseinheit (DDU) umfasst.

6. Ein digitales Übertragungsnetzwerk (C2) mit einer Mehrpfadanordnung (MA) an einem Ende und einer Sende- und/oder Empfangseinheit (Bs, RD) an dem anderen Ende für die Verteilung des besagten Signals, nach einem beliebigen der Ansprüche 3 bis 5.

7. Ein Innenraum-Kommunikationssystem mit einer Mehrpfadanordnung (MA) nach einem beliebigen der Ansprüche 3 bis 5.

## Revendications

1. Procédé de communication intérieure, le procédé comprenant
une station de base (Bs) recevant un signal destiné à une station mobile (Ms) se trouvant à l'intérieur d'un environnement confiné (B),
la station de base adaptant ledit signal pour la transmission au moyen d'un réseau numérique (C2),
le réseau numérique (C2) distribuant le signal numérique vers une unité distante numérique (RD), qui adapte le signal numérique pour la transmission grâce à des moyens d'émission sans fil (A2 à A4),
la station mobile (Ms) recevant le signal émis par les moyens d'émission sans fil (A2 à A4) et délivrant ledit signal à un récepteur à ratissage,
le procédé étant **caractérisé par**
dans un arrangement à trajets multiples (MA) agencé à l'intérieur du réseau numérique, le fractionnement du signal numérique en au moins deux sous-signaux numériques sensiblement identiques, l'application d'un retard différent à chaque sous-signal numérique individuel de sorte que la différence de retard entre les sous-signaux numériques soit au moins égale à la durée d'un élément, puis la combinaison des au moins deux sous-signaux numériques avec des retards différents.

2. Procédé de communication intérieure, le procédé comprenant
des moyens de réeeption sans fil (A2 à A4) recevant un signal sans fil (Ws) de la part d'une station mobile (Ms) se trouvant à l'intérieur d'un environnement confiné (B),
les moyens de réception sans fil transférant le signal reçu vers une unité distante numérique (RD) qui adapte le signal pour la transmission au moyen d'un réseau numérique (C2),
le réseau numérique (C2) distribuant le signal numérique vers une station de base (Bs), et la station de base (Bs) délivrant le signal reçu à un récepteur à ratissage.
le procédé étant **caractérisé par**
dans un arrangement à trajets multiples (MA) agencé à l'intérieur du réseau numérique, le fractionnement du signal numérique en au moins deux sous-signaux numériques sensiblement identiques, l'application d'un retard différent à chaque sous-signal numérique individuel de sorte que la différence de retard entre les sous-signaux numériques soit au moins égale à la durée d'un élément, puis la combinaison des au moins deux sous-signaux numériques avec des retards différents.

3. Arrangement à trajets multiples (MA) pour adapter un signal numérique de sortie unique à un récepteur à ratissage dans une station mobile (Ms) se trouvant à l'intérieur d'un environnement confiné (B), ledit signal de sortie étant distribué par un réseau numérique (C2) d'un système de communication intérieure, comprenant des moyens pour
fractionner un signal numérique entrant en au moins deux sous-signaux numériques identiques,
délivrer chaque sous-signal numérique à un chemin de signal (AEFB, ACDB)
appliquer un retard différent à chaque sous-signal numérique individuel de sorte que la différence de retard entre les sous-signaux numériques soit au moins égale à la durée d'un élément, et
combiner les au moins deux sous-signaux numériques avec des retards différents dans ledit signal numérique de sortie unique.

4. Arrangement à trajets multiples (MA) selon la revendication 3 dans lequel la différence de retard entre les chemins de signaux (AEFB, ACDB) des au moins deux sous-signaux numériques individuels est un multiple d'une durée d'un élément.

5. Arrangement à trajets multiples (MA) selon la revendication 3 dans lequel au moins le premier chemin de signal (ACDB) comprend une unité de retard numérique (DDU).

6. Réseau de transmission numérique (C2) comprenant un arrangement à trajets multiples (MA) dans une extrémité et une unité d'émission et/ou de réception (Bs, RD) dans l'autre extrémité pour la distribution dudit signal, selon l'une quelconque des revendications 3 à 5.

7. Système de communication intérieure comprenant un arrangement à trajets multiples (MA) selon l'une quelconque des revendications 3 à 5.
